# EUROPÄISCHE PATENTSCHRIFT

(11) **EP 0 647 346 B1**
(45) Veröffentlichungstag und Bekanntmachung des Hinweises auf die Patenterteilung: **15.05.1996**
(21) Anmeldenummer: 93913010.0
(22) Anmeldetag: 18.06.1993
(51) Int. Cl.: G11B 23/027

(54) **SAMMELVERPACKUNG FÜR AUF KERNE GEWICKELTE MAGNETBÄNDER**
PACKAGE FOR A PLURALITY OF MAGNETIC TAPES WOUND ON A CORE
EMBALLAGE POUR UNE PLURALITE DE BANDES MAGNETIQUES BOBINEES SUR UN NOYAU

(30) Priorität: 26.06.1992 DE 9208555 U
(43) Veröffentlichungstag der Anmeldung: 12.04.1995
(73) Patentinhaber: BASF Magnetics GmbH, D-68165 Mannheim (DE)
(72) Erfinder: LIEPOLD, August, D-8000 München 70 (DE); THIELE, Hartmut, D-8000 München 71 (DE); TORAL, Jose, D-8000 München 70 (DE); LUTZ, Gottfried, D-8031 Seefeld (DE); BRANDSTETTER, Hermann, D-8000 München 70 (DE)
(74) Vertreter: Karau, Wolfgang, Dr.
(86) Internationale Anmeldenummer: EP9301555
(87) Internationale Veröffentlichungsnummer: WO9400844

(56) Entgegenhaltungen:
- EP-A- 0 475 055
- DE-A- 4 025 906
- DE-B- 1 004 542
- DE-U- 9 208 555
- FR-A- 993 282
- GB-A- 506 065
- US-A- 1 889 933
- US-A- 2 327 156

## Beschreibung

Verpackungsbehälter zusammengesetzt aus zwei Zuschnitten aus Verpackungsmaterial, von denen der eine aus einem Boden- mit damit verbundenen Seitenteilen besteht und der andere ein quadratisches Deckelteil darstellt und die zwei Zuschnitte über faltbare Verbindungslaschen der Seitenteile das Deckelteil übergreifen, für auf mit inneren Bohrungen versehenen Kerne aufgewickelte magnetische Aufzeichnungsträger (sogenannte Pancakes), wobei die inneren Bohrungen der Wickelkerne sowie je eine zentrale Ausnehmung des Bodenteils und des Deckelteils von einer zu dem Verpackungsbehälter gehörenden einteiligen zylindrischen Hülse durchragt werden, auf welche die Pancakes stapelbar aufsteckbar sind.

Ein Verpackungsbehälter der oben genannten Art ist aus der EP-A 0 475 055 bekannt. Die US-A 1 889 933 beschreibt einen Verpackungsbehälter für aufgewickelte Bänder, worin die Seitenteile beim Zufalten der Verpackung in einen Schlitz, welcher benachbart dem oberen Rand der Hülse ist, einsteckbar sind.

Verpackungsbehälter dieser Art sind aus ökonomischen und ökologischen Gründen insbesondere deswegen gegen die bisher bekannten Polystyrol-Schaum-Verpackungen optimal, weil die meisten Teile rücksendbar beziehungsweise wiederverwendbar sind und weil das Volumenverhältnis von Verpackung zum Inhalt wesentlich günstiger ist als bei den bereits erwähnten Polystyrol-Schaum-Verpackungen. Diese Gesichtspunkte spielen beim Versand der Pancakes eine große Rolle, da weltweit von den Magnetbandfabriken sogenannte RohwarenVerpackungen in großen Mengen verkauft werden. In diesen ist das Magnetband auf Wickelkerne, beispielsweise flanschlose Wickelkerne, entweder die sogenannten NAB-Kerne oder stapelbare Wickelkerne gemäß US 4 081 151 oder andere, aufgewickelt. Diese Pancakes werden entweder einzeln oder in Sammelgebinden verpackt und mit einer Schrumpffolie überzogen.

Die aus der EP-A 0 475 055 bekannte Verpackung hat folgende Nachteile:
- Die Verpackungsstoffe haben ein großes Volumen und sind nur schwierig recyclebar
- der Kartonzuschnitt ist bei den einzelnen Ausführungsbeispielen kompliziert beziehungsweise voluminös gestaltet oder aber die Herstellung ist kostspielig
- das Zusammenfügen der Verpackung geschieht durch Verkleben oder Versiegeln, erfordert also einen zusätzlichen Arbeitsgang
- die Hülse ist entweder mehrteilig gestaltet oder die Verpackung erfordert besondere Schnappelemente beim Zusammenfügen.

Deswegen bestand die Aufgabe, Verpackungsbehälter der oben genannten gattungsmäßigen Art mit geringstem Materialeinsatz zu schaffen, bei denen sowohl der Kartonzuschnitt wie auch die Kernhülse möglichst einfach aufgebaut ist und wobei die Behälter einfach zusammensetzbar sind.

Erfindungsgemäß wurde die Aufgabe gelöst mit im wesentlichen quaderförmigen Verpackungsbehältern mit den im kennzeichnenden Teil des Anspruchs 1 genannten Merkmalen. Weitere Einzelheiten der Erfindung gehen aus den Unteransprüchen, der Beschreibung sowie den Zeichnungen hervor.

Im folgenden wird die Erfindung anhand der Zeichnungen näher erläutert und zwar zeigt
- Figur 1a: eine Ausführungsform des erfindungsgemäßen Verpackungsbehälters im aufgefalteten Zustand
- Figur 1b: die gleiche Verpackung im zusammengesetzten Zustand
- Figur 2a: eine weitere, besonders bevorzugte Ausführungsform im aufgefalteten Zustand
- Figur 2b: die gleiche Verpackung im zusammengesetzten Zustand.

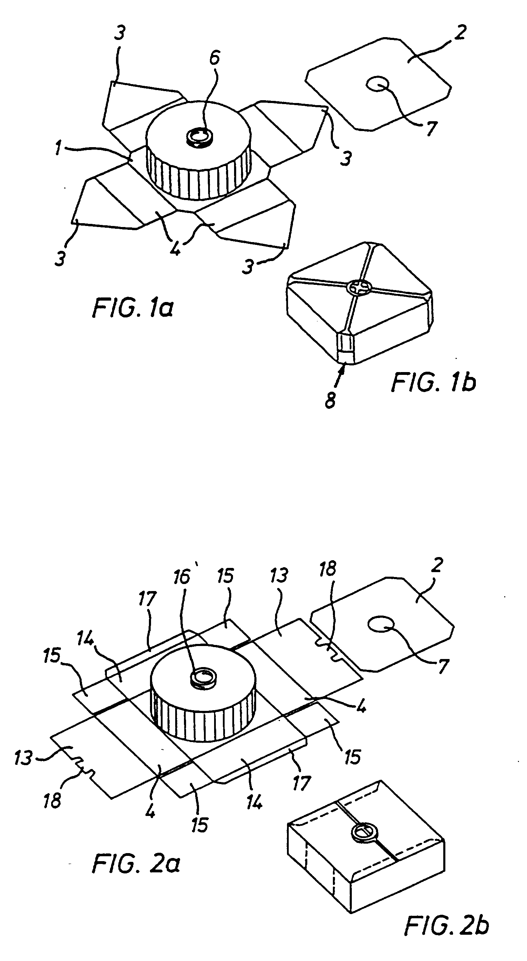

Wie aus der Figur 1a erkennbar, besteht eine Ausführungsform des Verpackungsbehälters aus einem zweiteiligen Zuschnitt, von dem ein Teil (1) das Boden- sowie die Seitenteile bilden und wobei der zweite Teil das Deckelteil (2) ist. Sowohl Bodenteil (1) wie Deckelteil (2) haben eine zentrale Ausnehmung (7), durch welche die Kernhülse (6) durchsteckbar ist. Die zylindrische Kernstütze kann beispielsweise durch die (nicht gezeichnete) Ausnehmung des Bodenteils durchgesteckt werden und kann an ihrer Unterseite einen (gleichfalls nicht gezeichneten) Sockel enthalten, durch den sie in dem Bodenteil fixiert ist. Auf der Kernstütze werden dann in bekannter Weise die Pancakes aufeinander gestapelt, bis annähernd der obere Rand der Hülse (6) erreicht ist. Daraufhin wird das Deckelteil (2) aufgelegt und anschließend werden die spitz zulaufenden Enden (3) der Seitenteile in vier schlitzförmige in Umfangsrichtung verlaufende Öffnungen am oberen Rand der Hülse (6) eingesteckt. Die dreieckigen Enden der Seitenteile sind wie üblich über Knicklinien und Zwischenteile (4) mit dem Bodenteil (1) einteilig verbunden. Die Abstützung der mit Pancakes bestückten Kernstütze quer zu ihrer Mittelachse erfolgt in der geschlossenen Verpackung einmal durch das Bodenteil (1) und zum anderen durch das Deckelteil (2). Zum Abschluß wird in üblicher Weise über das Ganze eine Schrumpffolie gezogen, so daß der gesamte Verpackungsbehälter, wie aus Figur 1b hervorgeht, mit Ausnahme der Eckflächen (8) durch Boden- und Deckelteil geschützt ist, wobei die Eckflächen (8) wie oben gesagt von der Schrumpffolie gegen Außeneinflüsse abgeschirmt sind. Anstelle der Schrumpffolie können auch ein oder mehrere Umreifungsbänder verwendet werden. In diesem Fall kann das Packgut vor dem Zusammenfalten des Kartons durch einen Kunststoffbeutel vor Außeneinflüssen (Staub usw.) geschützt werden.

Eine besonders bevorzugte Version des erfindungsgemäßen Verpackungsbehälters geht aus den Figuren 2a und 2b hervor. Dabei sind die Seitenteile (4, 13, 14, 15, 17) im wesentlichen rechteckig aufgebaut, wobei jeweils zwei gegenüberliegende Seitenteile gleichartig gestaltet sind. Das Zusammensetzen dieser Version geschieht im wesentlichen wie oben geschildert, wobei nach dem Aufstecken des Deckelteils (2) auf die Hülse zunächst die Laschen (14, 17) mit den jeweiligen Seitenklappen (15) aufgefaltet werden und dann anschließend die Seitenteile (4, 13) aufgefaltet werden, wobei jeweils an der Mitte der Außenseiten der Seitenteile (13) ein durch Einschnitte vom übrigen Teil getrenntes Einsteckteil (18) vorgesehen ist, welches in entsprechende zwei Schlitze am Ende der Hülse (16) eingesteckt wird. Auch hier erfolgt die Abstützung der Hülse wie oben beschrieben. Anschließend wird bezüglich Einschrumpfen mit Schrumpffolie oder mit einem Umreifungsband wie oben verfahren. Die letztgenannte Version der Verpackung hat den Vorteil, daß der Verpackungsinhalt allseitig sowohl vom Zuschnitt wie auch von der Schrumpffolie verschlossen ist, so daß der Schutz des Verpackungsgutes noch optimaler ist.

Das Bodenteil, das Deckelteil und die Seitenteile bestehen in einer bevorzugten Ausführung aus Karton; die Hülse besteht aus Kunststoff, beispielsweise aus Polyethylen oder Polypropylen. In einer anderen Ausführungsform können alle Teile der erfindungsgemäßen Verpackung aus Kunststoff bestehen.

## Patentansprüche

1. Im wesentlichen quaderförmiger Verpackungsbehälter zusammengesetzt aus zwei Zuschnitten aus Verpackungsmaterial, von denen der eine aus einem Boden- mit damit verbundenen Seitenteilen besteht und der andere ein quadratisches Deckelteil darstellt und die zwei Zuschnitte über faltbare Verbindungslaschen der Seitenteile das Deckelteil übergreifen, für auf mit inneren Bohrungen versehene Kerne aufgewickelte magnetische Aufzeichnungsträger (sogenannte Pancakes), wobei die inneren Bohrungen der Wickelkerne sowie je eine zentrale Ausnehmung (7) des Bodenteils (1) und des Deckelteils (2) von einer zu den Verpackungsbehälter gehörenden einteiligen zylindrischen Hülse (6, 16) durchragt werden, auf welche die Pancakes stapelbar aufsteckbar sind, dadurch gekennzeichnet,
daß die Enden von mindestens zwei Seitenteilen (3, 13) beim Zufalten der Verpackung in Schlitze einsteckbar sind, welche im oberen Endbereich der den Kern durchragenden Hülse (6, 16) in deren Umfangsrichtung verlaufend vorgesehen sind.

2. Verpackungsbehälter nach Anspruch 1, wobei die Enden (3) der mit dem Bodenteil (1) verbundenen Seitenteile dreieckförmig zulaufen.

3. Verpackungsbehälter nach Anspruch 1, wobei die vier Seitenteile im wesentlichen rechteckig ausgebildet sind, wobei zwei einander gegenüberliegende Seitenteile (14, 17) jeweils beidseitig Seitenlaschen (15) aufweisen und die beiden weiteren einander gegenüberliegende Seitenteile an ihrem Außenrand durch Einschnitte begrenzte Einstecklaschen (18) zum Einstecken in zwei Schlitze am oberen Ende der Hülse (16) aufweisen.

4. Verpackungsbehälter gemäß einem der Ansprüche 1 bis 3, wobei Boden- und Deckelteil aus Karton und Hülse (6, 16) aus hartem Kunststoff bestehen.

## Claims

1. A substantially cuboidal packaging container composed of two blanks of packaging material, of which one comprises a base part with side parts joined thereto and the other represents a square lid part and the two blanks reach over the lid part by means of foldable joining tabs of the side parts, for magnetic recording media wound onto hubs provided with internal bores (known as pancakes), the internal bores of the winding hubs and in each case a central clearance (7) of the base part (1) and of the lid part (2) being penetrated by a one-part cylindrical sleeve (6, 16), which belongs to the packaging container and onto which the pancakes can be stackably fitted, wherein the ends of at least two side parts (3, 13) can be inserted during the folding up of the pack into slits which are provided in the upper end region of the sleeve (6, 16), penetrating the hub, said slits running in the circumferential direction of said sleeve.

2. The packaging container as claimed in Claim 1, the ends (3) of the side parts joined to the base part (1) tapering triangularly.

3. The packaging container as claimed in Claim 1, the four side parts being of a substantially rectangular design, two mutually opposite side parts (14, 17) having side tabs (15) on both sides in each case and the two further mutually opposite side parts having at their outer edge insert tabs (18), bounded by incisions, for insertion into two slits at the upper end of the sleeve (16).

4. The packaging container as claimed in one of Claims 1 to 3, base part and lid part consisting of cardboard, and sleeve (6, 16) consisting of hard plastic.

## Revendications

1. Récipient d'emballage de forme sensiblement parallélépipédique constitué de deux flans en un matériau d'emballage, dont l'un est constitué d'une partie fond et de parties latérales lui étant reliées et l'autre constitue une partie couvercle carrée et les deux flans saisissant par le dessus la partie couvercle par l'intermédiaire de pattes de liaison pliables des parties latérales, pour des supports d'enregistrement magnétiques (ce que l'on appelle des pancakes) enroulés sur des noyaux pourvus de perçages intérieurs, les perçages intérieurs des noyaux d'enroulement ainsi qu'un évidement central (7) respectif de la partie fond (1) d'une part et de la partie couvercle (2) d'autre part étant traversés par une douille cylindrique (6, 16) monopièce appartenant au récipient d'emballage et sur laquelle les pancakes sont susceptibles d'être enfilés en empilement, caractérisé en ce que les extrémités d'au moins deux parties latérales (3, 13) sont susceptibles d'être enfilées dans des fentes, lors de la fermeture par pliage de l'emballage, fentes qui sont prévues pour s'étendre dans la zone supérieure de la douille (6, 16) traversant le noyau, dans sa direction périphérique.

2. Récipient d'emballage selon la revendication 1, les extrémités (3) des parties latérales reliées à la partie fond (1) se rejoignant en formant un triangle.

3. Récipient d'emballage selon la revendication 1, les quatre parties latérales étant réalisées sensiblement à angle droit, deux parties latérales (14, 17) opposées l'une à l'autre présentant chacune des pattes latérales (15), situées de part et d'autre, et les deux autres parties latérales opposées l'une à l'autre présentant sur leur bord extérieur des pattes d'enfichage (18) délimitées par des entailles et destinées à être enfilées dans deux fentes ménagées à l'extrémité supérieure de la douille (16).

4. Récipient d'emballage selon l'une des revendications 1 à 3, la partie fond et la partie couvercle étant en carton et la douille (6, 16) étant en une matière plastique dure.
